**Europäisches Patentamt**

**European Patent Office**

**Office européen des brevets**

(19)

(11) Numéro de publication : **0 343 067 B1**

# FASCICULE DE BREVET EUROPEEN

(12)

(45) Date de publication du fascicule du brevet :
**31.03.93 Bulletin 93/13**

(51) Int. Cl.⁵ : **G02C 7/06**

(21) Numéro de dépôt : **89401361.4**

(22) Date de dépôt : **17.05.89**

(54) **Lentille diffractive a profil mixte.**

(30) Priorité : **19.05.88 FR 8806699**

(43) Date de publication de la demande :
**23.11.89 Bulletin 89/47**

(45) Mention de la délivrance du brevet :
**31.03.93 Bulletin 93/13**

(84) Etats contractants désignés :
**CH DE ES GB IT LI NL SE**

(56) Documents cités :
**EP-A- 0 109 753
FR-A- 1 180 268
US-A- 1 735 758
US-A- 1 955 047
US-A- 3 004 470
US-A- 4 162 122
US-A- 4 210 391**

(73) Titulaire : **ESSILOR INTERNATIONAL, Cie
Générale d'Optique
1 Rue Thomas Edison, Echat 902
F-94028 Créteil Cédex (FR)**

(72) Inventeur : **Baude, Dominique
1, Allée du 8 mai 1945
F-93400 Saint-Ouen (FR)**
Inventeur : **Chavel, Pierre
6, Avenue de Rocroi Le Bois des Ormes
F-91380 Chilly Mazarin (FR)**
Inventeur : **Joyeux, Denis
51, Rue des Chardonnerets
F-91940 Les Ulis (FR)**
Inventeur : **Taboury, Jean
89, Rue Houdan
F-92230 Sceaux (FR)**

(74) Mandataire : **Martin, Jean-Jacques et al
Cabinet REGIMBEAU 26, Avenue Kléber
F-75116 Paris (FR)**

EP 0 343 067 B1

Jouve, 18, rue Saint-Denis, 75001 PARIS

## Description

La présente invention concerne le domaine des lentilles ophtalmiques.

Elle concerne tout particulièrement les lentilles de contact et les implants intraoculaires. Les lentilles de contact unifocales sont destinées à être placées sur la cornée de l'oeil et elles permettent de compenser les amétropies de l'oeil (myopie ou hyperopie). Par contre, les implants intraoculaires sont destinés à remplacer le cristallin à l'intérieur de l'oeil.

On a cherché, depuis de nombreuses années, à développer des lentilles de contact bifocales ou multifocales placées devant la cornée, permettant de compenser l'accommodation des sujets presbytes et donnant la possibilité de corriger à la fois un défaut de vision de loin et d'assiter le cristallin en vision de près.

On a déjà proposé de nombreux types de lentilles de contact bifocales ou multifocales. Cependant, aucune de ces lentilles à focales multiples jusqu'ici proposées ne donne pleinement satisfaction.

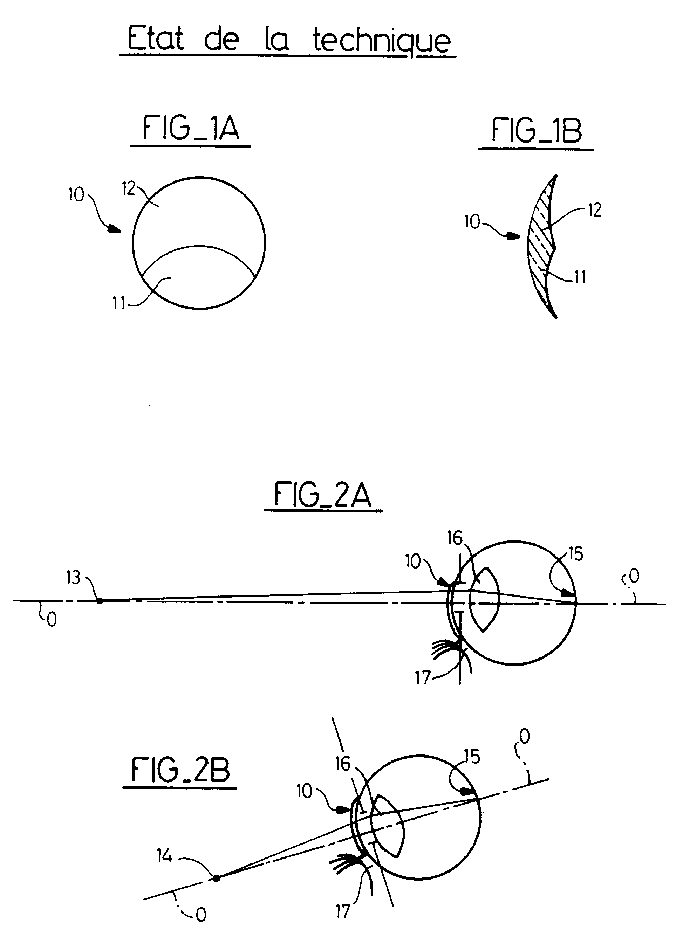

Le document FR-A-1 423 908 évoque, comme illustré schématiquement sur les figures 1A et 1B annexées correspondant respectivement à une vue de face et à une vue de section latérale, une lentille de contact 10 formée de deux régions 11, 12 possédant sur une face au moins des rayons de courbures différents et donc des propriétés de réfraction différentes adaptées respectivement à la vision de près et à la vision de loin. L'utilisation de la lentille décrite dans le document FR-A-1 423 908 requiert un déplacement relatif entre la lentille et l'oeil lors du passage de la vision de loin à la vision de près grâce à l'appui de la lentille sur la paupière inférieure, de sorte que l'axe de la vision O-O passe alternativement par l'une ou l'autre des deux régions 11, 12. Sur les figures 2A et 2B annexées, on a illustré schématiquement la position relative théorique de la lentille 10 et de l'oeil respectivement en vision de loin et en vision de près. Sur ces figures 2A et 2B un objet éloigné est référencé 13, un objet rapproché est référencé 14, tandis que la rétine, le cristallin naturel et la paupière inférieure sont référencés 15, 16 et 17 respectivement. Un tel type de lentille ne donne pas entière satisfaction. On notera notamment que ce type de lentille requiert en théorie un déplacement important de la lentille 10 par rapport à l'oeil de sorte que l'axe de la vision O-O passe alternativement par l'une ou l'autre des deux régions 11, 12. De ce fait, l'appui indispensable de la lentille 10 sur la paupière inférieure 17, combiné avec le déplacement relatif lentille/oeil rendent ces lentilles difficilement supportables. Si par ailleurs les deux types de correction sont utilisés simultanément, l'axe optique O-O étant proche de la jonction entre les deux régions 11, 12, on obtient un saut d'image non acceptable.

On notera que, comme illustré sur les figures 3A, 3B et 4A, 4B respectivement en vue de face et en vue de section latérale, les documents US-A-1 647 721 et US-A-1 735 758 évoquent des lentilles 20, 30, destinées à être montées sur des montures de lunettes qui présentent, de façon similaire au document FR-A-1 423 908, des régions 21, 22 ; 31, 32, possédant des propriétés de réfraction différentes ; cependant, selon les documents US-A-1 647 721 et US-1 735 758 les propriétés de réfraction différentes ne sont pas obtenues par variation de rayon de courbure, mais par variation d'indice. Plus précisément, les propriétés différentes de réfraction sont obtenues par inclusion, dans le corps 22, 32 de la lentille formé d'un matériau d'indice déterminé, d'un élément 21, 31, formé d'un matériau d'indice différent. Les lentilles définies dans les documents US-A-1 647 721 et US-A-1 735 758 présentent les mêmes inconvénients que la lentille présentée dans le document FR-A-1 423 908.

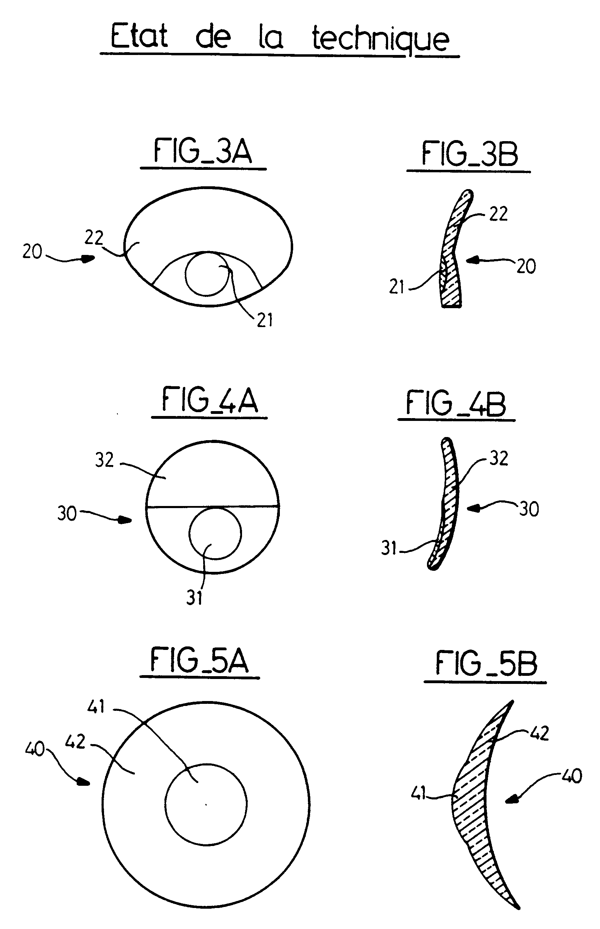

Les lentilles de contact de l'art antérieur qui ont été succinctement décrites ci-avant en référence aux figures 1 à 4 sont destinées à permettre une vision alternée. Ces lentilles nécessitent généralement un ballast pour maintenir leur orientation et empêcher leur rotation sur l'oeil, ballast qui constitue une surépaisseur fort gênante pour le confort du porteur.

De plus, il est nécessaire que le déplacement de la lentille soit parfaitement contrôlé pour assurer une vision alternée correcte. Or, du fait de différentes variations, indépendantes de la géométrie de la lentille, telles que pression palpébrale, écoulement du film de larmes etc... , ce déplacement peut devenir irrégulier et non contrôlé.

Pour pallier à ces inconvénients d'autres lentilles de contact ont été proposées et font appel au concept de vision simultanée de loin et de près.

Comme illustré schématiquement sur les figures 5A et 5B annexées respectivement en vue de face et en vue de section latérale, les documents EP-A-1 184 490, EP-A-0 232 191, US-A-4 636 049 évoquent une lentille de contact 40 formée de deux régions concentriques 41, 42, possédant sur au moins une face des rayons de courbure différents et donc des propriétés de réfraction différentes, adaptées respectivement à la vision de près et à la vision de loin. Ces lentilles n'exigent plus de déplacement relatif entre la lentille et l'oeil pour passer d'un type de vision à l'autre. Cependant on observe une superposition d'images à la transition entre les deux régions. De plus, le composant est très sensible aux variations du diamètre pupillaire et ce dernier peut connaître de grandes variations en fonction de la luminance et du patient. Par exemple, si la région centrale 41 de la lentille est attribuée à la vision de près, lorsque l'ouverture de la lentille est telle qu'elle ne recouvre que la région centrale 41, l'utilisateur ne peut voir correctement un objet éloigné.

Le document US-A-3 726 578 évoque une lentille qui présente de façon similaire aux documents EP-A-0 184 490, EP-0 232 191 et US-A-4 636 049 des régions concentriques possédant des propriétés différentes de réfraction. Cependant, selon le document US-A-3 726 578, les propriétés différentes de réfraction ne sont pas obtenues par variation de rayon de courbure, mais par variation d'indice, c'est-à-dire par inclusion, dans le corps de la lentille formé d'un matériau d'indice déterminé, d'un élément formé d'un matériau d'indice différent.

Le document US-A-3 339 997 évoque une lentille très proche de celles précitées mais qui cependant, utilisant l'aberration chromatique de l'oeil, possède deux régions concentriques ou non, de chromatisme différent afin de présenter des propriétés différentes de réfraction selon la longueur d'onde.

Les documents US-A-3 004 470, US-4 162 122, US-A-4 210 391 et US-4 340 283 évoquent des lentilles 50, 60 schématiquement illustrées en vue de face sur la figure 6A annexée et en sections latérales sur les figures 6B et 6C, présentant non plus deux régions concentriques seulement comme préconisé par les documents EP-A-0 184 490, EP-0 232 191 et US-A-4 636 049, mais une série de zones concentriques en couronne 51, 52 ; 61, 62, présentant alternativement des rayons de courbure d'une première et d'une seconde valeurs 53, 54, 63, 64, pour travailler alternativement en vision de près et en vision de loin. L'alternance des zones permet de s'affranchir de la sensibilité à la variation du diamètre pupillaire, (c'est là un avantage certain par rapport à l'objet des documents EP-A-0 184 490, EP-A-O 232 191 et US-A- 4 636 O49). Cependant, les lentilles évoquées dans les documents US-A-3 OO4 47O, US-A-1 162 122, US-A-4 210 391 et US-A-4 340 283 ne font pas mention des propriétés diffractives de tels profils alternés.

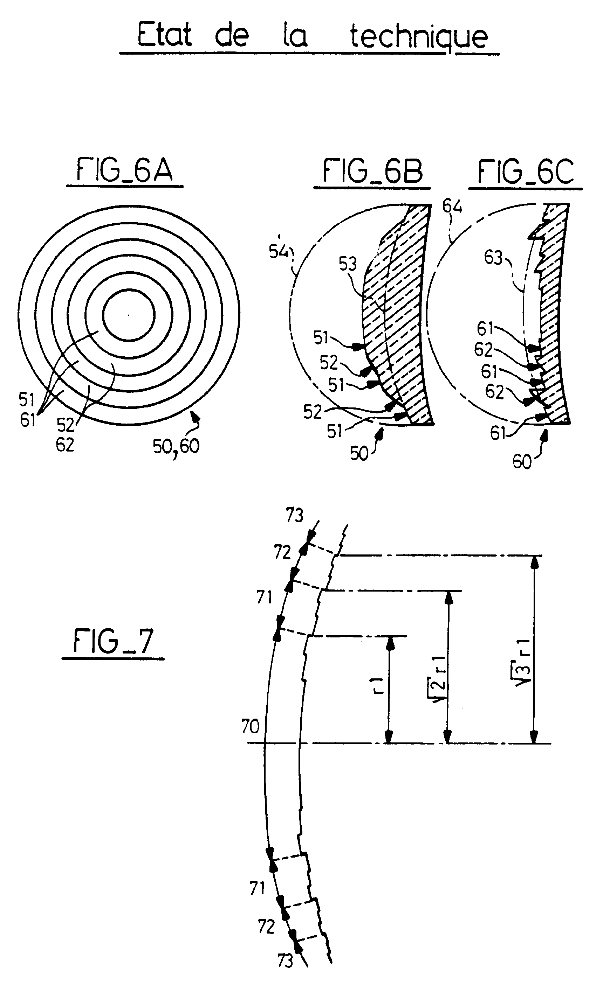

Les documents EP-A-O O64 812 et US-A-4 637 697 évoquent un autre type de lentille, destiné à réaliser une correction bifocale de l'oeil sans séparation de zone. Pour cela, la lentille proposée dans les documents EP-A-O O64 812 et US-A-4 637 697 possède une surface postérieure et une surface antérieure de courbures moyennes adaptées à la correction nécessaire pour la vision de loin du porteur, la lentille possédant en outre un hologramme qui fournit à la lentille un pouvoir de diffraction additionnel, tel que l'image d'un objet rapproché soit focalisé correctement sur la rétine. Selon les documents précités, l'hologramme peut êtré généré au sein de la lentille ou en surface de celle-ci. L'hologramme peut être généré par enregistrement holographique. Il peut être généré mécaniquement sous forme d'un hologramme en relief à la surface de la lentille, comme illustré sur la figure 7 annexée, c'est-à-dire sous forme d'un réseau zoné inspiré du système optique connu de l'homme de l'art, sous le nom de réseau de SORET.

Plus précisément encore, les hologrammes en relief selon le document US-A-4 637 697 sont formés de zones 70, 71, 72, 73, 74, concentriques de même surface, c'est-à-dire dont les rayons externes évoluent selon une progression géométrique en $\sqrt{K}\, r_1$ ou $r_1$ désigne le rayon externe de la zone centrale 70, et K désigne les entiers. Le profil de phase de l'hologramme en relief est identique pour toutes les zones 70, 71, 72, 73, 74 et asymétrique pour privilégier l'ordre de diffraction +1. A titre d'exemple, le profil de phase de chaque zone 70, 71, 72, 73, 74 peut être défini par une suite de A niveaux concentriques d'épaisseurs différentes pour obtenir des différences de retard optique de $2\pi/A$. Selon le document EP-A-O O64 812, l'hologramme peut être prévu sur la totalité ou sur une partie seulement de la zone optique de la lentille. De plus, la lentille peut être réalisée avec plusieurs hologrammes générés séparément, éventuellement superposés, fournissant des puissances de diffraction différentes. Dans le cas d'hologrammes en relief formant un réseau zoné, l'obtention de puissances de diffraction différentes se matérialise par des zones constituées de sous-zones concentriques dont les rayons externes répondent à des progressions géométriques différentes d'une zone à l'autre. L'utilisation de lentilles du type évoqué dans les documents EP-O O64 812 et US-A-4 637 697 pose des problèmes de perception des contrastes dans certaines conditions de vision.

On notera que le document GB-A-802 918 décrivait antérieurement l'association, dans un système de visée pour arme à feu, d'une part de moyens optiques permettant à l'utilisateur de voir nettement une cible éloignée, d'autre part d'un réseau zoné permettant a l'utilisateur d'observer le guidon de l'arme. Selon le document GB-A-802 918, le réseau zoné peut être formé soit d'une lentille transparente dont l'une des faces est formée de zones concentriques de même surface, alternativement transparentes et opaques, soit d'une lentille transparente formée de couronnes concentriques de même surface radiale mais présentant alternativement l'une ou l'autre de deux épaisseurs optiques.

La présente invention a pour but de proposer un nouveau type de lentille bifocale ou multifocale qui élimine les inconvénients de lentilles antérieures.

La lentille ophtalmique conforme à la présente invention est du type connu comportant des composants diffractifs concentriques, et elle est caractérisée par le fait qu'elle comprend au moins deux régions concentriques possédant des composants diffractifs qui présentent des profils de phase différents d'une région à l'autre afin d'utiliser des ordres de diffraction différents.

Comme cela sera explicité par la suite, la lentille conforme à la présente invention, du fait qu'elle possède des composants diffractifs de profils de phase différents répartis sur des régions concentriques, présente un rapport d'efficacité de diffraction en vision de loin et en vision de près respectivement qui évolue en fonction du diamètre de l'ouverture pupillaire. La lentille conforme à la présente invention peut donc être mieux adaptée aux conditions d'utilisation.

D'autres caractéristiques, buts et avantages de la présente invention apparaîtront à la lecture de la description détaillée qui va suivre, et en regard des dessins annexés donnés, à titre d'exemples non limitatifs et sur lesquels :

- les figure 1 à 7 précédemment décrites illustrent l'état de la technique,
- la figure 8 représente une vue schématique en section latérale d'une lentille conforme à la présente invention,
- les figures 9A et 9B représentent en vue agrandie le profil des reliefs des composants diffractifs d'une région de la lentille,
- la figure 10 représente en vue agrandie le profil des reliefs des composants diffractifs d'une autre région de la lentille,
- la figure 11 représente une vue en section d'une autre variante de la lentille conforme à la présente invention,
- les figures 12 et 13 représentent l'efficacité des composants diffractifs représentés respectivement sur les figures 8 et 11, en fonction de l'ouverture de la pupille, et
- les figures 14, 15, 16 et 17 représentent l'efficacité de lentilles conformes à 4 exemples de réalisation de la présente invention.

Comme indiqué précédemment, selon une caractéristique essentielle, une lentille 100 conforme à la présente invention comprend au moins deux régions concentriques 110, 120, possédant des composants diffractifs présentant des profils de phase différents afin de privilégier des ordres de diffraction différents.

Les composants diffractifs peuvent être formés d'hologrammes de phases par modulation du relief ou de l'indice, dénommés par la suite hologrammes de relief ou d'incide.

De plus, les régions concentriques diffractives de la lentille 100 conforme à la présente invention peuvent être associées à un composant réfractif déterminé par la géométrie de la lentille. Le composant réfractif est formé par la différence de rayon de courbure entre les deux surfaces principales 130, 140, de la lentille. Plus précisément, le composant réfractif peut posséder un pouvoir de réfraction identique sur toute l'étendue de la lentille, ou peut posséder deux pouvoirs de réfraction différents, respectivement en regard des deux régions concentriques 110, 120, de composants diffractifs. On peut encore envisager d'utiliser un composant réfractif présentant différents pouvoirs de réfraction en regard d'une seule région concentrique 110, 120, de composants diffractifs.

Selon une caractéristique préférentielle de la présente invention, les deux régions concentriques 110, 120, de la lentille présentant des profils de phase différents, sont adaptées pour travailler respectivement l'une dans l'ordre n = +1, l'autre dans les ordres n = +1 et n = -1.

Dans le cas où les composants diffractifs sont formés d'hologrammes d'indice, ces composants diffractifs sont formés de zones annulaires concentriques présentant chacune une variation d'indice en direction radiale, le profil d'indice des diverses zones annulaires étant identique, pour une région considérée 110 ou 120 mais différant d'une région à l'autre.

Le rayon externe des zones annulaires concentriques précitées, considéré par rapport à l'axe optique de la lentille évolue selon une progression géométrique du type $\sqrt{K}\, r_1$ où
K désigne les entiers, et
$r_1$ désigne le rayon externe de l'anneau central.

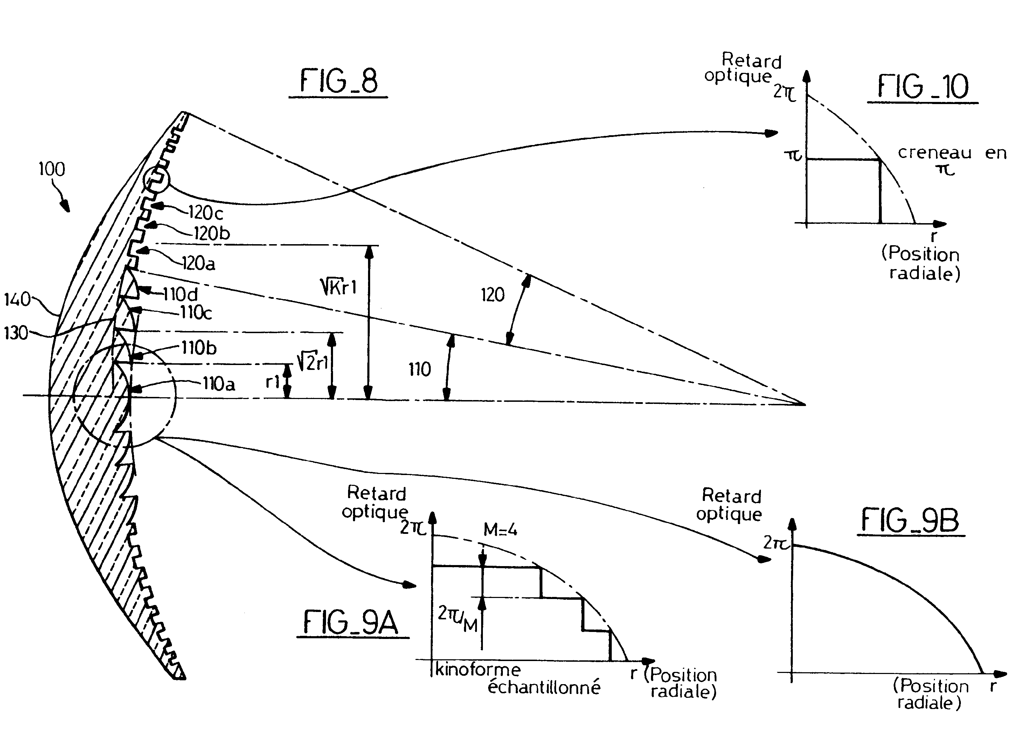

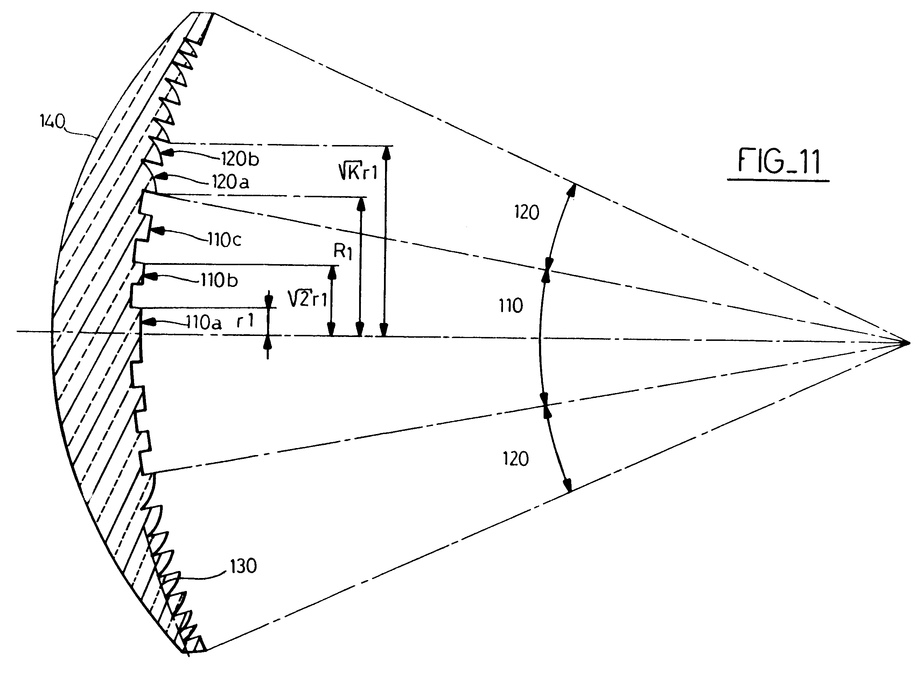

Dans le cas où les composants diffractifs sont formés d'un hologramme en relief, l'une des faces 130 ou 140 de la lentille est formée de structures en relief annulaires concentriques. Chaque région 110, 120 est formée d'au moins une structure annulaire en relief centrée sur l'axe de la lentille. Chaque région 110, 120, peut être formée d'un grand nombre de structures en relief concentriques référencées 110a, 110b, 110c... pour la région centrale 110 et 120a, 120b, 120c... pour la région périphérique 120 sur les figures 8 et 11.

Ces structures 110a, 110b ; 120a, 120b, ont le même profil pour une même région 110 ou 120 mais les structures en relief 110a, 110b ; 120a, 120b, ont des profils différents d'une région à l'autre. Les différentes structures 110a, 110b ; 120a, 120b, possèdent toutes la même surface. Les rayons externes des différentes structures évoluent selon une progression géométrique du type $\sqrt{K}\, r_1$ où
$r_1$ désigne le rayon externe de la structure centrale 110a, comme illustré sur les figures 8 et 11 et
K désigne les entiers successifs.

Les focales $f_n$ du composant diffractif ainsi formé sont égales à $f_n = r_1^2/2n\lambda$ où
$r_1$ désigne le rayon externe de la structure centrale 110a,
n désigne l'ordre de diffraction et
$\lambda$ désigne la longueur d'onde considérée.

Le nombre $N_1$ de structures 110a, 110b... incluses dans la région centrale 110 de diamètre $D_1$ égale :
$$N_1 = D_1^2/4\, r_1^2.$$

Le nombre $N_2$ de structures 120a, 120b... incluses dans la rgion périphérique 120 de diamètre $D_2$ égale :
$$N_2 = (D_2^2 - D_1^2)/4r_1^2.$$

Le nombre N de structures incluses dans le diamètre d'ouverture pupillaire D égale :
$$N = D^2/4r_1^2.$$

Le profil des structures 110a, 110b, 120a, 120b... peut être continu comme illustré sur la figure 9B ; il peut aussi être échantillonné, comme illustré sur la figure 9A, par exemple formé de M niveaux, déphasés de $2\pi/M$ générant des différences de retard optique

$\lambda/M$.

L'efficacité de diffraction $E_n$ pour l'ordre n d'une telle structure échantillonnée formée de M niveaux déphasés de $2\pi/M$ est égale à :

$$E_n = \frac{\text{Energie dans l'ordre n}}{\text{Energie incidence}}$$

$$E_n = \frac{(\sin \pi n/M)^2}{(\pi n/M)^2} \cdot \frac{\sin^2 \pi (1 - n)}{M^2 \sin^2 \pi (1 - n)/M}$$

L'efficacité de diffraction globale $E_{ng}$ de la lentille 100 possédant deux régions concentriques 110, 120 de profils de phase différents correspond à la moyenne de l'efficacité de diffraction $E_{n110}$, $E_{n120}$ à l'ordre n des régions 110, 120, contenues dans le diamètre d'ouverture pupillaire D, soit :

$$E_{ng} = \frac{N_{10}E_{n110} + N_{20}E_{n120}}{N}$$

Dans la relation ci-dessus, $N_{10}$ et $N_{20}$ désignent le nombre de structures 110a, 110b ; 120a, 120b, de chaque région contenue dans le diamètre d'ouverture pupillaire D. A titre d'exemple, si le diamètre d'ouverture pupillaire D égale le diamètre $D_1$ de la région centrale 110, $N_{10} = N_1$ et $N_{20} = 0$.

L'ordre de diffraction n = +1 est obtenu pour des structures en relief du type kinoforme échantillonné, comme illustré sur la figure 9A, c'est-à-dire des structures présentant un profil composé de M niveaux avec M supérieur à 2, déphasé de $2\pi/M$.

Par exemple, pour M = 4 l'efficacité de diffraction $E_1$ à l'ordre n = +1 est égale à 0,81, alors qu'elle est nulle pour les ordres 0 et -1, l'énergie restante se répartissant dans les ordres supérieurs.

Les ordres de diffraction n = +1 et n = - 1 sont obtenus simultanément par une structure du type fonction créneau générant un déphasage de $\pi$ , comme illustré sur la figure 10, c'est-à-dire une alternance de zones annulaires concentriques générant des déphasages relatifs de $\pi$. L'efficacité de diffraction de telles structures en créneau générant un déphasage de $\pi$ est égale à O,4 pour n = +1 et n = -1 alors que l'efficacité de diffraction $E_n$ est nulle pour les autres ordres n.

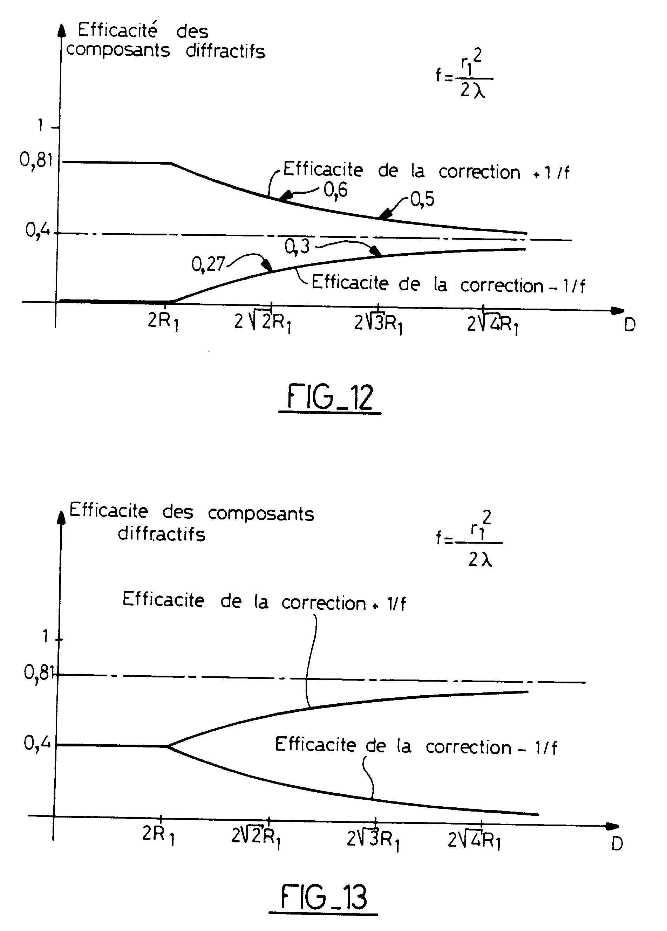

L'efficacité de diffraction globale d'un composant diffractif composé, comme illustré schématiquement sur la figure 8 d'une région centrale 110 formée d'un kinoforme échantillonné en 4 niveaux déphasés de $2\pi/4$ et d'une région périphérique 120 formée d'une fonction créneau 0, $\pi$ en fonction du diamètre d'ouverture pupillaire D est illustrée sur la figure 12.

Lorsque le diamètre D de l'ouverture pupillaire est inférieur ou égal au diamètre externe $D_1$ ($2R_1$) de la région centrale 110, N = $N_{10}$ et $N_{20} = 0$, l'efficacité de diffraction globale,
$E_{ng} = E_{n110}$ et donc $E_{+1g} = 0,81$ pour n = +1 et
$E_{ng} = 0$ pour n = -1 et n = 0.

En conclusion, lorsque le diamètre D de l'ouverture pupillaire est inférieur ou égal au diamètre externe $D_1$ de la région centrale 110 le composant diffractif présente une efficacité de 0,81 pour la puissance correctrice +1/f (on rappelle que $f_n = r_1^2/2n\lambda$).

Lorsque le diamètre D de l'ouverture pupillaire est supérieur au diamètre externe $D_1$ ($2R_1$) de la région centrale 110, l'efficacité du composant diffractif est déterminée par la relation suivante :

$$E_{ng} = \frac{N_{10}E_{n110} + N_{20}E_{n120}}{N}$$

donc :

$$E_{+1g} = 0,4 + 0,41 \frac{D_1^2}{D^2} \text{ pour } n = +1$$

$$E_{-1g} = 0,4 - 0,4 \frac{D_{1_2}}{D^2} \text{ pour } n = -1$$

$$E_{ng} = 0 \text{ pour } n = 0.$$

En d'autres termes lorsque le diamètre D de l'ouverture pupillaire est supérieur au diamètre externe $D_1$ de la région centrale 110, comme illustré sur la figure 12, l'efficacité globale de la lentille pour la correction +1/f décroit vers une asymptote à 0,4 alors que l'efficacité globale de la lentille pour la puissance de correction -1/f croît vers une asymptote à 0,4.

L'efficacité de diffraction globale $E_{ng}$ d'un composant diffractif du type illustré schématiquement sur la figure 11 composé d'une région centrale 110 formée d'une fonction créneau 0,$\pi$ et d'une région périphérique 120 formée d'un kinoforme échantillonné en 4 niveaux déphasés de $2\pi/4$, en fonction du diamètre de l'ouverture pupillaire D, est illustrée sur la figure 13.

Lorsque le diamètre D de l'ouverture pupillaire est inférieur ou égal au diamètre externe $D_1$ ($2R_1$) de la région centrale 110, N= $N_{10}$ et l'efficacité globale $E_{ng} = E_{n110}$, donc :

$$E_{+1g} = 0,4 \text{ pour } n = +1,$$
$$E_{-1g} = 0,4 \text{ pour } n = -1,$$
$$E_{ng} = 0 \text{ pour } n = 0.$$

En d'autres termes, lorsque le diamètre D de l'ouverture pupillaire est inférieur ou égal au diamètre externe $D_1$ de la région centrale 110, la lentille présente une efficacité globale identique et égale à 0,4 pour les puissances de correction +1/f et -1/f.

Lorsque le diamètre D de l'ouverture pupillaire est supérieur au diamètre externe $D_1$ ($2R_1$) de la région centrale 110, l'efficacité globale de la lentille est donnée par la relation :

$$E_{ng} = \frac{N_{10}E_{n110} + N_{20}E_{n120}}{N}$$

donc :

$$E_{+1g} = 0,81 - 0,41 \frac{D_1^2}{D^2} \text{ pour } n = +1$$

$$E_{-1g} = 0,4 \frac{D_1^2}{D^2} \text{ pour } n = -1 \text{ et}$$

$$E_{ng} = 0 \text{ pour } n = 0.$$

En d'autres termes, lorsque le diamètre D de l'ouverture pupillaire est supérieur au diamètre externe $D_1$ de la région centrale 110, comme illustré sur la figure 13, l'efficacité globale de la lentille pour la puissance de correction +1/f croît vers une asymptote à 0,81, alors que l'efficacité globale de la lentille pour la puissance de correction -1/f décroît vers 0.

On va maintenant décrire 4 exemples de lentille conformes à la présente invention.

## EXEMPLE 1

On souhaite réaliser une lentille présentant une puissance de correction en vision de près $P_P$ = -2,5 dioptries, favorisée en forte luminance et maintenue à un seuil minimal enfaible luminance et une puissance de correction en vision de loin $P_L$ = -4 dioptries favorisée en faible luminance.

La lentille répondant à ces critères comprend :
- une lentille réfractive de puissance constante 1/f' = -3,25 dioptries, et
- un composant diffractif de puissance 1/f = 0,75 dioptrie, du type illustré sur la figure 8 annexée composé d'une région centrale 110 formée d'un kinoforme échantillonné en M niveaux (4 niveaux par exemple) et d'une région périphérique 120 formée d'une fonction créneau en 0,$\pi$.

La région centrale 110 du composant diffractif travaille dans l'ordre +1. Elle fournit une focale +f avec une efficacité de diffraction $E_{1g}$ = 0,81. La puissance de correction de la région centrale 110 de la lentille, seule active à forte luminance est donc :
1/f + 1/f' = 0,75 - 3,25 = -2,50 dioptries avec une efficacité constante.

La région périphérique 120 du composant diffractif active à faible luminance travaille à la fois dans les ordres n = +1 et n = -1 avec l'efficacité $E_{+1g}$ = 0,4 et $E_{-1g}$ = 0,4. Elle fournit les deux focales +f et -f avec une efficacité de diffraction de 0,4.

La région périphérique fournit donc deux puissances de correction :
1/f + 1/f' = 0,75 - 3,25 = -2,5 dioptries et
-1/f + 1/f' = -0,75 - 3,25 = -4 dioptries.

L'efficacité de ces deux corrections est constante et égale à 0,4 pour la région périphérique 120 seule. En considérant la lentille 100 les efficacités de ces deux corrections (-2,5 et -4 dioptries) décroissent et croissent respectivement avec le diamètre d'ouverture pupillaire D, à partir de D supérieur à $D_1$.

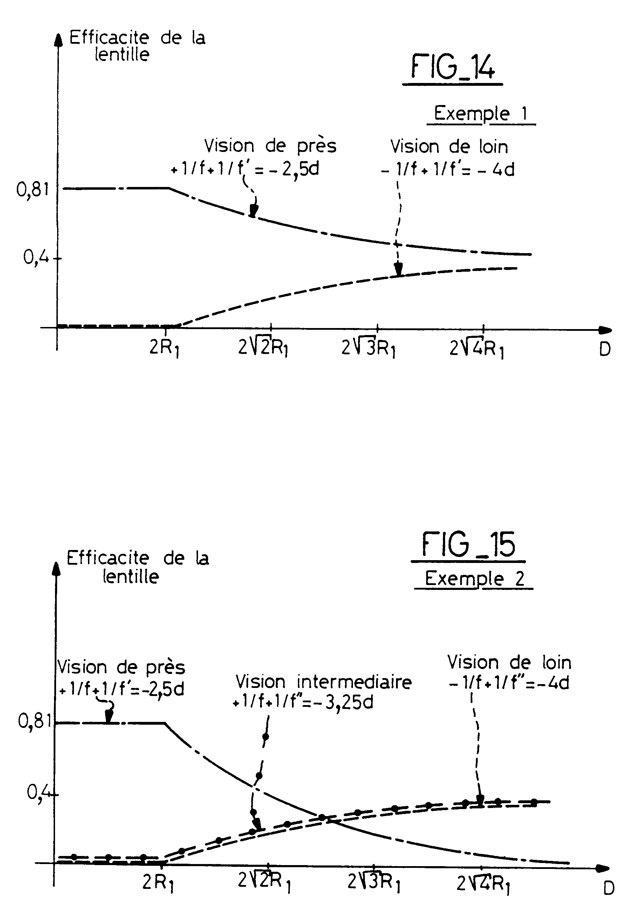

L'efficacité de la correction en vision de près et de la correction en vision de loin ainsi obtenue est illustrée sur la figure 14 annexée. La figure 14 montre que la lentille conforme à ce premier exemple favorise bien la vision de près à forte luminance tout en maintenant un seuil de correction en vision de près à faible luminance, d'une part, et autorise une vision de loin à faible luminance d'autre part.

## EXEMPLE 2

On souhaite réaliser une lentille présentant une puissance de correction en vision de près $P_P$ = -2,5 dioptries favorisée en forte luminance, une puissance de correction en vision intermédiaire $P_I$ = -3,25 dioptries favorisée en faible luminance et une puissance de correction en vision de loin $P_L$ = -4 dioptries favorisée en faible luminance.

La lentille répondant à ces critères comprend :
- un composant réfractif comportant une région centrale de puissance 1/f' = -2,875 dioptries et une région périphérique de puissance 1/f'' = -3,625 dioptries, et
- un composant diffractif de puissance 1/f = 0,375 dioptries du type illustré sur la figure 8 comportant une région centrale 110 formée d'un kinoforme échantillonné de 4 niveaux et d'une région périphérique 120 formée d'une fonction créneau 0,$\pi$.

Les régions centrales et périphériques du composant réfractif et du composant diffractif sont placées respectivement en regard, c'est-à-dire qu'elles possèdent des rayons externes identiques.

La région centrale 110 du composant diffractif travaille dans l'ordre +1. Elle fournit une focale +f avec une efficacité de diffraction $E_{1g}$ = 0,81. La puissance de correction de la région centrale 110 de la lentille est donc :
1/f + 1/f' = 0,375 - 2,875 = -2,50 dioptries avec une efficacité constante.

La région périphérique du composant diffractif travaille à la fois dans les ordres n = +1 et n = -1 avec l'efficacité $E_{+1g}$ = 0,4 et $E_{-1g}$ = 0,4. Elle fournit les deux focales +f et -f avec une efficacité de diffraction de 0,4.

La région périphérique 120 fournit donc deux puissances de correction :
1/f + 1/f'' = 0,375 - 3,625 = -3,25 dioptries et
-1/f + 1/f'' = -0,375 - 3,625 = - 4 dioptries.

L'efficacité de ces deux corrections est constante et égale à 0,4 pour la région périphérique 120 seule. En considérant la lentille globale, l'efficacité de ces deux corrections -3,25 dioptries et -4 dioptries qui correspondent respectivement à la correction requise pour la vision intermédiaire et la vision de loin croît avec le diamètre d'ouverture pupillaire D à partir de D supérieure à $D_1$.

L'efficacité de la lentille pour la vision de près, la vision intermédiaire et la vision de loin, en fonction du diamètre de l'ouverture pupillaire D, est illustrée schématiquement sur la figure 15. Celle-ci montre que la lentille correspond aux conditions requises, à savoir une vision de près favorisée en forte luminance et une vision intermédiaire et une vision de loin favorisée en faible luminance.

## EXEMPLE 3

On souhaite réaliser une lentille présentant une puissance de correction en vision de près $P_P$ = - 2,5 dioptries maintenue à un seuil minimal en forte luminance et favorisée en faible luminance et une puissance de correction en vision de loin $P_L$ = - 4 dioptries favorisée en forte luminance.

La lentille répondant à ces critères comprend :
- une lentille réfractive de puissance constante $1/f'$ = - 3,25 dioptries, et
- un composant diffractif de puissance $1/f$ = 0,75 dioptries du type illustré sur la figure 11 annexée composé d'une région centrale 110 formée d'une fonction créneau $0,\pi$ et d'une région périphérique 120 formée d'un kinoforme échantillonné de M niveaux (4 niveaux par exemple).

La région centrale du composant diffractif travaille dans les ordres n = +1 et n = -1 avec l'efficacité $E_{+1g}$ = 0,4 et $E_{-1g}$ = 0,4. Elle fournit les deux focales +f et -f avec une efficacité de diffraction de 0,4.

La région centrale 110 fournit donc deux puissances de correction :
$1/f + 1/f'$ = 0,75 - 3, 25 = -2,50 dioptries et
$-1/f + 1/f'$ = -0,75 - 3,25 = -4 dioptries.

L'efficacité de ces deux corrections - 2,50 dioptries et -4 dioptries est constante et égale à 0,4 pour la région centrale 110.

La région périphérique 120 du composant diffractif travaille dans l'ordre +1. Elle fournit une focale +f avec une efficacité de diffraction $E_{+1g}$ = 0,81. La puissance de correction de la région périphérique 120 de la lentille est donc :
$1/f + 1/f'$ = 0,75 -3,25 = -2,50 dioptries avec une efficacité constante de 0,81.

En considérant la lentille globale, cette correction de -2,50 dioptries croît donc avec le diamètre d'ouverture pupillaire D à partir de D supérieur à $D_1$.

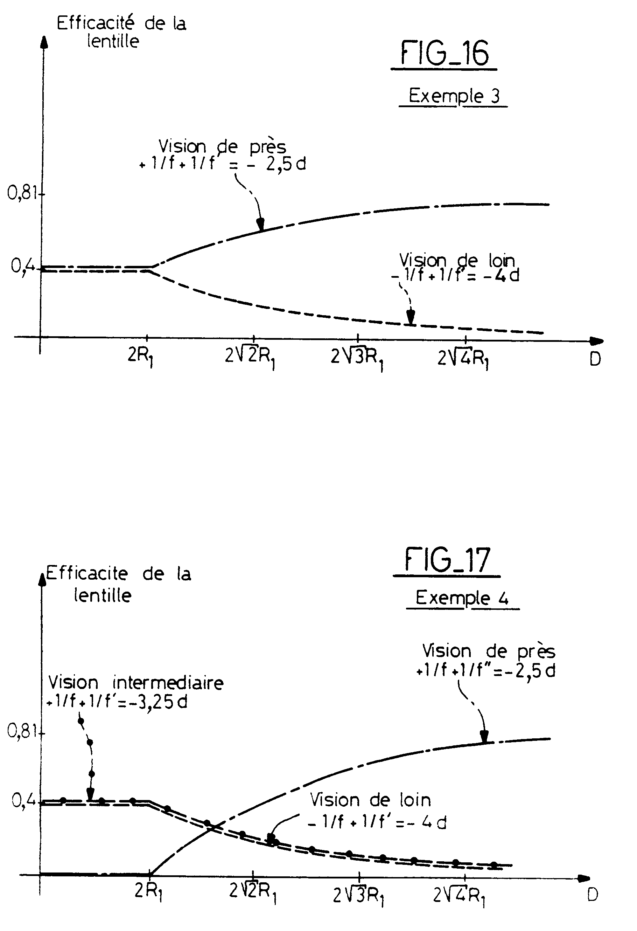

La figure 16 qui illustre schématiquement l'efficacité de la lentille pour les puissances de correction en vision de près et en vision de loin montre que la lentille conforme au troisième exemple précité répond aux critères attendus, à savoir une vision de près maintenue à un seuil en forte luminance et favorisée en faible luminance et une vision de loin favorisée en forte luminance.

## EXEMPLE 4

On souhaite réaliser une lentille présentant une puissance de correction en vision de près $P_P$ = -2,50 dioptries favorisée en faible luminance, une puissance de correction en vision intermédiaire $P_I$ = -3,25 dioptries favorisée en forte luminance et une puissance de correction en vision de loin $P_L$ = -4 dioptries favorisée en forte luminance.

La lentille répondant à ces critères comprend :
- un composant réfractif comportant une région centrale de puissance
$1/f'$ = -3,625 dioptries et une région périphérique de puissance
$1/f''$ = -2,875 dioptries, et

- un composant diffractif de puissance $1/f$ = 0,375 dioptries du type illustré sur la figure 11 annexée comportant une région centrale 110 formée d'un kinoforme échantillonné de 4 niveaux et d'une région périphérique 120 formée d'une fonction créneau $0,\pi$.

La région centrale et la région périphérique du composant réfractif et du composant diffractif sont placées respectivement en regard, c'est-à-dire qu'elles possèdent des rayons externes identiques.

La région centrale 110 du composant diffractif travaille dans les ordres n = +1 et n = -1 avec l'efficacité $E_{+1g}$ = 0, 4 et $E_{-1g}$ = 0,4. Elle fournit deux focales +f et -f avec une efficacité de diffraction de 0,4. La région centrale 110 de la lentille fournit donc deux puissances de correction :
$1/f + 1/f'$ = 0,375 - 3,625 = -3,25 dioptries et
$-1/f + 1/f'$ = -0,375 - 3,625 = -4 dioptries.

L'efficacité de ces deux corrections -3,25 dioptries et -4 dioptries est constante et égale à 0,4 pour la région centrale 110.

La région périphérique 120 du composant diffractif travaille dans l'ordre +1. Elle fournit une focale +f avec une efficacité de diffraction $E_{+1g}$ = 0,81. La puissance de correction de la région périphérique de la lentille est donc :
$1/f + 1/f''$ = 0,375 - 2,875 = -2,5 dioptries.

L'efficacité de cette correction de -2,5 dioptries est constante et égale à 0,81 pour la région périphérique 120 seule. En considérant la lentille globale, l'efficacité de cette correction de -2,5 dioptries croît vers 0,81 avec le diamètre d'ouverture pupillaire D à partir de D supérieur à $D_1$.

La figure 17 annexée qui représente schématiquement l'efficacité de la correction de la lentille en vision de près, en vision intermédiaire et en vision de loin montre que la lentille conforme au quatrième exemple répond aux critères précités à savoir : une vision de près favorisée en faible luminance ainsi qu'une vision intermédiaire et une vision de loin favorisées en forte luminance.

L'hologramme nécessaire pour la réalisation du composant diffractif présentant deux profils de phase différents conformes à la présente invention peut être généré à l'aide de tous moyens connus en soi par l'homme de l'art, notamment par gravure, moulage ou enregistrement.

Bien entendu la présente invention n'est pas limitée aux modes de réalisation qui viennent d'être décrits mais s'étend à toutes variantes conformes à son esprit.

## Revendications

1. Lentille ophtalmique du type comportant des composants diffractifs concentriques (110a, 110b...; 120a, 120b...) et, caractérisée par le fait qu'elle comprend au moins deux régions (110, 120) concentriques possédant des composants diffractifs (110a, 110b...; 120a, 120b...) qui présentent des profils de phase différents d'une région à l'autre afin d'utiliser des ordres de diffraction (h) différents.

2. Lentille selon la revendication 1, caractérisée par le fait que les composants diffractifs (110a, 110b... ; 120a, 120b...) sont formés d'hologrammes en relief.

3. Lentille selon l'une des revendications 1 ou 2, caractérisée par le fait que les composants diffractifs (110a, 110b... ; 120a, 120b...) sont formés de structures en relief, annulaires et concentriques, sur l'une des faces de la lentille, le profil des diverses structures en relief étant identique pour une région considérée, mais différant d'une région à l'autre.

4. Lentille selon la revendication 3, caractérisée par le fait que le rayon externe des structures en relief (110a, 110b... : 120a, 120b...), considéré par rapport à l'axe optique de la lentille, évolue selon une progression géométrique du type $\sqrt{K}\, r_1$ où K désigne les entiers, et
$r_1$ le rayon externe de la structure centrale.

5. Lentille selon la revendication 1, caractérisée par le fait que les composants diffractifs sont formés d'hologrammes d'indice.

6. Lentille selon l'une des revendications 1 ou 5, caractérisée par le fait que les composants diffractifs sont formés d'anneaux concentriques présentant une variation d'indice en direction radiale, le profil d'indice des diverses zones annulaires concentriques étant identique pour une région considérée, mais différant d'une région à l'autre.

7. Lentille selon la revendication 6, caractérisée par le fait que le rayon externe des zones annulaires concentriques, considéré par rapport à l'axe optique de la lentille, évolue selon une progression géométrique du type $\sqrt{K}\, r_1$ où K désigne les entiers, et
$r_1$ le rayon externe de l'anneau central.

8. Lentille selon l'une des revendications 1 à 7, caractérisée par le fait que les composants diffractifs sont associés à un composant réfractif formé par la géométrie générale de la lentille (130, 140).

9. Lentille selon la revendication 8, caractérisée par le fait que le composant réfractif (130, 140) possède un pouvoir de réfraction identique sur toute l'étendue de la lentille.

10. Lentille selon la revendication 8, caractérisée par le fait que le composant réfractif (130, 140) possède au moins deux pouvoirs de réfractions différents, respectivement en regard des régions concentriques des composants diffractifs ayant même profil de phase.

11. Lentille selon la revendication 8, caractérisée par le fait que le composant réfractif (130, 140) possède au moins deux pouvoirs de réfraction différents, en regard d'une région des composants diffractifs ayant même profil de phase.

12. Lentille selon l'une des revendications 1 à 11, caractérisée par le fait que les régions concentriques (110, 120) de composants diffractifs présentant des profils de phase différents sont adaptées pour travailler respectivement, l'une dans l'ordre n = +1, l'autre dans les ordres n = +1 et n = -1.

13. Lentille selon l'une des revendications 1 à 4 et 8 à 12, caractérisée par le fait que les régions concentriques (110, 120) de composants diffractifs présentant des profils de phase différents sont formées respectivement, l'une d'un kinoforme échantillonné à M niveaux déphasés de $2\pi/M$ avec M>2, l'autre de créneaux en $\pi$.

14. Lentille selon l'une des revendications 1 à 13, caractérisée par le fait qu'elle forme un implant intraoculaire destiné à remplacer le cristallin.

15. Lentille selon l'une des revendications 1 à 13, caractérisée par le fait qu'elle forme une lentille de contact destinée à être placée sur la cornée de l'oeil pour assister le cristallin en vision de près.

**Patentansprüche**

1. Augenlinse der Bauart mit beugenden, konzentrischen (110a, 110b,...; 120a, 120b...) Bestandteilen, dadurch **gekennzeichnet,** daß
sie wenigstens zwei konzentrische Bereiche (110, 120) umfaßt, die beugende Bestandteile (110a, 110b,...; 120a, 120b,...) besitzen, die von einem Bereich zum anderen unterschiedliche Phasenprofile aufweisen, um die verschiedenen Ordnungen (h) der Beugung zu nutzen.

2. Linse nach Anspruch 1, dadurch **gekennzeichnet,** daß
die beugenden Bestandteile (110a, 110b,...; 120a, 120b...) von reliefförmigen Hologrammen gebildet sind.

3. Linse nach einem der Ansprüche 1 oder 2, dadurch **gekennzeichnet**, daß
die beugenden Bestandteile (110a, 110b,...; 120a, 120b...) von ringförmigen, konzentrischen Relief-Strukturen auf einer Seite der Linse gebildet sind, wobei das Profil der verschiedenen Relief-Strukturen für einen betrachteten Bereich identisch, aber von einem Bereich zum anderen verschieden ist.

4. Linse nach Anspruch 3, dadurch **gekennzeichnet**, daß
der äußere Radius der Relief-Strukturen (110a, 110b,...; 120a, 120b,...), im Verhältnis zur optischen Achse der Linse sich gemäß einergeometrischen Reihe des Typs $\sqrt{K}$ $r_1$ verändert, wobei K die ganzen zahlen und $r_1$ den äußeren Radius der zentralen Struktur bezeichnen.

5. Linse nach Anspruch 1, dadurch **gekennzeichnet**, daß
die beugenden Bestandteile von Brechungshologrammen gebildet sind.

6. Linse nach einem der Ansprüche 1 oder 5, dadurch **gekennzeichnet, daß**
die beugenden Bestandteile von konzentrischen Ringen gebildet sind, die in radialer Richtung eine Änderung der Brechung aufweisen, wobei das Brechungsprofil der verschiedenen ringförmigen konzentrischen Zonen für einen betrachteten Bereich identisch, aber von einem Bereich zum anderen verschieden ist.

7. Linse nach Anspruch 6, dadurch **gekennzeichnet**, daß
der äußere Radius der ringförmigen konzentrischen Zonen im Verhältnis zur optischen Achse der Linse sich gemäß einer geometrischen Reihe des Typs $\sqrt{K}$ $r_1$ verändert, wobei K die ganzen zahlen und $r_1$ den äußeren Radius des zentralen Rings bezeichnet.

8. Linse nach einem der Ansprüche 1 bis 7, dadurch **gekennzeichnet, daß**
die beugenden Bestandteile mit einem brechenden Bestandteil verbunden sind, der durch die allgemeine Geometrie der Linse (130, 140) gebildet ist.

9. Linse nach Anspruch 8, dadurch **gekennzeichnet**, daß
der brechende Bestandteil (130, 140) ein über die ganze Ausdehnung der Linse identisches Brechungsvermögen besitzt.

10. Linse nach Anspruch 8, dadurch **gekennzeich-**

**net, daß**
der brechende Bestandteil (130, 140) mindestens zwei verschiedene Brechungsvermögen besitzt, und zwar jeweils bezogen auf die konzentrischen Bereiche der beugenden Bestandteile, die dasselbe Phasenprofil haben.

11. Linse nach Ansspruch 8, dadurch **gekennzeichnet, daß**
der brechende Bestandteil (130, 140) mindestens zwei verschiedene Brechungsvermögen besitzt, verglichen mit einem Bereich der beugenden Bestandteile, die dasselbe Phasenprofil haben.

12. Linse nach einem der Ansprüche 1 bis 11, dadurch **gekennzeichnet, daß**
die konzentrischen, verschiedene Phasenprofile aufweisenden Bereiche (110, 120) der beugenden Bestandteile zum Arbeiten angepaßt sind, jeweils der eine in der Ordnung n = + 1 und der andere in den Ordnungen n = + 1 und n = - 1.

13. Linse nach einem der Ansprüche 1 bis 4 und 8 bis 12, dadurch **gekennzeichnet, daß**
die konzentrischen, verschiedene Phasenprofile aufweisenden Bereiche (110, 120) der beugenden Bestandteile aus jeweils einem in Stufenform, zusammengestellt aus um 2 $\pi$/M phasenverschobenen M Niveaus mit M>2 und dem anderen mit Lücken in $\pi$n gebildet sind.

14. Linse nach einem der Ansprüche 1 bis 13, dadurch **gekennzeichnet, daß**
sie ein intraokulares Implantat bildet, das zum Ersetzen der Augenlinse bestimmt sind.

15. Linse nach einem der Ansprüche 1 bis 13, dadurch **gekennzeichnet, daß**
sie eine Kontaktlinse bildet, die zum Aufsetzen auf die Hornhaut des Auges zur Unterstützung der Augenlinse beim Sehen in der Nähe bestimmt ist.

**Claims**

1. Ophthalmic lens of the type comprising concentric diffractive components (110a, 110b ... 120a, 120b ...) and characterized in that it comprises at least two concentric regions (110, 120) having diffractive components (110a, 110b ... 120a, 120b ...) with different phase contours from one region to the other in order to use different orders of diffraction (h).

2. A lens according to claim 1, characterized in that the diffractive components (110a, 110b ... 120a, 120b ...) are formed by holograms in relief.

3. A lens according to one of claims 1 or 2, characterized in that the diffractive components (110a, 110b ... 120a, 120b ...) are formed by annular and concentric structures in relief, on one of the faces of the lens, the contour of the various structures in relief being identical for a considered region, but different from one region to another.

4. A lens according to claim 3, characterized in that the external radius of the structures in relief (110a, 110b ... 120a, 120b ...) considered with respect to the optical axis of the lens, develops according to a geometrical progression of the type $\sqrt{K}r_1$ where
K designates whole numbers and
$r_1$ designates the external radius of the central structure.

5. A lens according to claim 1, characterized in that the diffractive components are formed by index holograms.

6. A lens according to one of claims 1 or 5, characterized in that the diffractive components are formed by concentrix rings having a variation in index in the radial direction, the index contour of the various concentric, annular zones being identical for a considered region, but different from one region to another.

7. A lens according to claim 6, characterized in that the external radius of the concentric, annular structures, considered with respect to the optical axis of the lens, develops according to a geometrical progression of the type $\sqrt{K}r_1$ where
K designates whole numbers and
$r_1$ designates the external radius of the central structure.

8. A lens according to one of claims 1 to 7, characterized in that the diffractive components are associated with a refractive component formed by the general geometry of the lens (130, 140).

9. A lens according to claim 8, characterized in that the refractive component (130, 140) possesses a refractive power identical throughout the extent of the lens.

10. A lens according to claim 8, characterized in that the refractive component (130, 140) has at least two different refraction power values, respectively facing the concentric regions of the diffractive components having a same phase contour.

11. A lens according to claim 8, characterized in that the refractive component (130, 140) has at least two different refraction power values, facing a region of diffractive components having a same phase contour.

12. A lens according to one of claims 1 to 11, characterized in that the concentric regions (110, 120) of diffractive components having different phase contours are adapted to working, respectively, one in the n = +1 order and the other in the n = +1 and n = -1 orders.

13. A lens according to one of claims 1 to 4 and 8 to 12, characterized in that the concentric regions (110, 120) of diffractive components having different phase contours, are respectively formed, one by a stepped kinoform lens with M levels phase-shifted by $2\pi/M$ with M > 2, the other with crenels in $\pi$.

14. A lens according to one of claims 1 to 13, formed by an intra-ocular implant designed to replace the crystalline lens.

15. A lens according to one of claims 1 to 13, formed by a contact lens designed to be placed on the cornea of the eye to assist the crystalline lens in close vision.

# Etat de la technique

## FIG_1A

## FIG_1B

## FIG_2A

## FIG_2B

# Etat de la technique

## FIG_3A

## FIG_3B

## FIG_4A

## FIG_4B

## FIG_5A

## FIG_5B

# Etat de la technique

## FIG_6A

## FIG_6B   FIG_6C

51
61
52
62
50,60

54
53
51
52
51
52
51
50

64
63
61
62
61
62
61
60

73
72
71
70

r1

√2 r1

√3 r1

71
72
73

## FIG_7

FIG_8

FIG_10

Retard optique

$2\pi$

$\pi$

creneau en $\pi$

r (Position radiale)

100

120c
120b
120a
110d
110c
110b
110a

140

130

$\sqrt{K'}r_1$

120

$\sqrt{2}r_1$

110

$r_1$

14

Retard optique

$2\pi$

M=4

$2\pi u_M$

FIG_9A

kinoforme échantillonné

r (Position radiale)

Retard optique

$2\pi$

FIG_9B

(Position radiale) r

EP 0 343 067 B1

FIG_11

140

120b
120a
110c
110b
110a r1
$\sqrt{K'}r1$
R1
$\sqrt{2}r1$
120
110
120
130

EP 0 343 067 B1

FIG_12

FIG_13

FIG_14

Exemple 1

Efficacite de la lentille

Vision de près
$+1/f+1/f' = -2,5d$

Vision de loin
$-1/f+1/f' = -4d$

0,81

0,4

$2R_1$  $2\sqrt{2}R_1$  $2\sqrt{3}R_1$  $2\sqrt{4}R_1$  D

FIG_15

Exemple 2

Efficacite de la lentille

Vision de près
$+1/f+1/f' = -2,5d$

Vision intermediaire
$+1/f+1/f'' = -3,25d$

Vision de loin
$-1/f+1/f'' = -4d$

0,81

0,4

$2R_1$  $2\sqrt{2}R_1$  $2\sqrt{3}R_1$  $2\sqrt{4}R_1$  D

## FIG_16

### Exemple 3

Efficacité de la lentille

Vision de près
$+1/f + 1/f'' = -2,5\,d$

Vision de loin
$-1/f + 1/f' = -4\,d$

0,81

0,4

$2R_1$    $2\sqrt{2}R_1$    $2\sqrt{3}R_1$    $2\sqrt{4}R_1$    D

## FIG_17

### Exemple 4

Efficacite de la lentille

Vision intermediaire
$+1/f + 1/f' = -3,25\,d$

Vision de près
$+1/f + 1/f'' = -2,5\,d$

Vision de loin
$-1/f + 1/f' = -4\,d$

0,81

0,4

$2R_1$    $2\sqrt{2}R_1$    $2\sqrt{3}R_1$    $2\sqrt{4}R_1$    D